# EUROPEAN PATENT APPLICATION

(11) **EP 4 764 899 A2**
(43) Date of publication of application: **24.06.2026**
(21) Application number: 26177520.9
(22) Date of filing: 06.04.2023
(51) Int. Cl.: G06F 16/906

(54) **SYSTEMS AND METHODS FOR IDENTIFYING AND RESOLVING INCIDENTS IN A SYSTEM USING AN ARTIFICIAL INTELLIGENCE MODEL**

(30) Priority: 07.04.2022 IN 202211020902; 02.08.2022 US 202217816745
(62) Divisional of application: 23724961.0
(71) Applicant: Fidelity Information Services, LLC, Jacksonville, Florida 32204 (US)
(72) Inventor: DUMA, Gary, Jacksonville, 32204 (US); SPARKE, Geoffrey Allan, Jacksonville, 32204 (US); WYNKOOP, Andrew, Jacksonville, 32204 (US); SHUKLA, Sudhanshu, Jacksonville, 32204 (US)
(74) Representative: Patel, Nikesh

(57) **Abstract**

A method for identifying and handling related incidents using a machine-learning based model, includes, performing by one or more processors, operations including: clustering a sub-group of incident records from among a plurality of incident records using the machine-learning based model based on a rolling time window and a number of records in the sub-group of incident records; creating a problem record based on the clustered incident records; populating the problem record with information related to the clustered incident records; linking the clustered incident records to the problem record; providing a notification that the problem record has been created; receiving a resolution for the problem record; and updating, based on the resolution, the machine-learning based model to learn an association between extracted features of the resolution and extracted features of the clustered incident records/

## Description

### CROSS-REFERENCE TO RELATED APPLICATION(S)

This application claims the benefit of priority to U.S. Application No. 17/816,745, filed on August 2, 2022, which claims the benefit of priority to Indian Application No. 202211020902, filed on April 7, 2022, the entire contents of which are incorporated herein by reference.

### TECHNICAL FIELD

Various embodiments of the present disclosure relate generally to identifying and resolving incidents in a system using an artificial intelligence model and, more particularly, to identifying and resolving clusters of similar recurring incidents in a system using an artificial intelligence model.

### BACKGROUND

Changes to any type of system creates some degree of risk that the system will not continue to perform as expected. Additionally, even if system performance is not immediately affected, a change to a system may cause later issues, and time may be lost to determine what caused the change in performance of the system.

For example, in software, deploying, refactoring, or releasing software code has different kinds of associated risk depending on what code is being changed. Not having a clear view of how vulnerable or risky a certain code deployment may be increases the risk of system outages. Deploying code always includes risks for a company, and platform modernization is a continuous process. A technology shift is a big event for any product, and entails a large risk and opportunity for a software company.

Outages and/or incidents cost companies money in service-level agreement payouts, but more importantly, wastes time for personnel via rework, and may risk adversely affecting a company's reputation with its customers. Highest costs are attributed to bugs reaching production, including a ripple effect and a direct cost on all downstream teams. Also, after a modification has been deployed, an incident team may waste time determining what caused a change in performance of a system.

IT operations change requests for changes across the IT landscape can have varying levels of risk and impact. In large IT organizations, change-caused incidents may make up 70-80% of critical incidents, and hence cause a significant burden on IT teams. Modern IT architectures have become increasingly complex. Resolving recurring incidents in a large system across the IT landscape frequently involves decentralized personnel and systems, and individual ticket and time-separated resolutions, resulting in significant inefficiencies in large IT organizations.

The present disclosure is directed to overcoming one or more of these above-referenced challenges.

### SUMMARY OF THE DISCLOSURE

In some aspects, the techniques described herein relate to a method for identifying and handling incidents using a machine-learning based model, the method including, performing by one or more processors, operations including: clustering a sub-group of incident records from among a plurality of incident records using the machine-learning based model based on a rolling time window and a number of records in the sub-group of incident records; creating a problem record based on the clustered incident records: populating the problem record with information related to the clustered incident records; linking the clustered incident records to the problem record; providing a notification that the problem record has been created; receiving a resolution for the problem record; and updating, based on the resolution, the machine-learning based model to learn an association between extracted features of the resolution and extracted features of the clustered incident records.

In some aspects, the techniques described herein relate to a method, wherein the rolling time window is three months and the number of records is one thousand records, so that incident records are clustered when at least one thousand records are identified in the sub-group of incident records by the machine-learning based model in the rolling time window of three months.

In some aspects, the techniques described herein relate to a method, wherein the incident records are clustered based on one or more of a description of the incident, a location where the incident occurred, or a priority level of the incident record.

In some aspects, the techniques described herein relate to a method, wherein the clustering is performed using Hierarchical Density-Based Spatial Clustering of Applications with Noise (HDBSCAN).

In some aspects, the techniques described herein relate to a method, wherein the information related to the clustered incident records includes one or more of an assigned problem management group, an assigned problem manager, a description of a most frequent value in the clustered incident records, a problem short description, or a problem long description.

In some aspects, the techniques described herein relate to a method, wherein the linking the clustered incident records to the problem record includes updating a field in each of the clustered incident records with an identification of the problem record.

In some aspects, the techniques described herein relate to a method, wherein the linking the clustered incident records to the problem record includes creating a parent/child relationship between the problem record and the clustered incident records.

In some aspects, the techniques described herein relate to a method, wherein the updating the machine-learning based model includes training the machine-learning based model to learn an association between clustered new incident records and the problem record.

In some aspects, the techniques described herein relate to a method, wherein the operations further include: when the machine-learning based model indicates the clustered new incident records are related to the problem record and the clustered new incident records are based on unacceptable incidents, creating a persisting problem record based on the clustered new incident records, linking the clustered new incident records to the persisting problem record, and linking the persisting problem record to the problem record to indicate an issue related to the problem record persists.

In some aspects, the techniques described herein relate to a method, wherein the operations further include: when the machine-learning based model indicates the clustered new incident records are related to the problem record and the clustered new incident records are based on acceptable incidents, omitting creating a new problem record based on the clustered new incident records.

In some aspects, the techniques described herein relate to a computer-implemented system for identifying and handling related incidents using a machine-learning based model, the computer-implemented system including: a memory to store instructions; and one or more processors to execute the stored instructions to perform operations including: clustering a sub-group of incident records from among a plurality of incident records using the machine-learning based model based on a rolling time window and a number of records in the sub-group of incident records; creating a problem record based on the clustered incident records: populating the problem record with information related to the clustered incident records; linking the clustered incident records to the problem record; providing a notification that the problem record has been created; receiving a resolution for the problem record; and updating, based on the resolution, the machine-learning based model to learn an association between extracted features of the resolution and extracted features of the clustered incident records.

In some aspects, the techniques described herein relate to a computer-implemented system, wherein the rolling time window is three months and the number of records is one thousand records, so that incident records are clustered when at least one thousand records are identified in the sub-group of incident records by the machine-learning based model in the rolling time window of three months.

In some aspects, the techniques described herein relate to a computer-implemented system, wherein the incident records are clustered based on one or more of a description of the incident, a location where the incident occurred, or a priority level of the incident record.

In some aspects, the techniques described herein relate to a computer-implemented system, wherein the clustering is performed using Hierarchical Density-Based Spatial Clustering of Applications with Noise (HDBSCAN).

In some aspects, the techniques described herein relate to a computer-implemented system, wherein the information related to the clustered incident records includes one or more of an assigned problem management group, an assigned problem manager, a description of a most frequent value in the clustered incident records, a problem short description, or a problem long description.

In some aspects, the techniques described herein relate to a computer-implemented system, wherein the linking the clustered incident records to the problem record includes updating a field in each of the clustered incident records with an identification of the problem record.

In some aspects, the techniques described herein relate to a computer-implemented system, wherein the linking the clustered incident records to the problem record includes creating a parent/child relationship between the problem record and the clustered incident records.

In some aspects, the techniques described herein relate to a computer-implemented system, wherein the updating the machine-learning based model includes training the machine-learning based model to learn an association between clustered new incident records and the problem record

In some aspects, the techniques described herein relate to a computer-implemented system, wherein the operations further include: when the machine-learning based model indicates the clustered new incident records are related to the problem record and the clustered new incident records are based on unacceptable incidents, creating a persisting problem record based on the clustered new incident records, linking the clustered new incident records to the persisting problem record, and linking the persisting problem record to the problem record to indicate an issue related to the problem record persists, and when the machine-learning based model indicates the clustered new incident records are related to the problem record and the clustered new incident records are based on acceptable incidents, omitting creating a new problem record based on the clustered new incident records.

In some aspects, the techniques described herein relate to a non-transitory computer readable medium storing instructions that, when executed by one or more processors, cause the one or more processors to perform operations including: clustering a sub-group of incident records from among a plurality of incident records using a machine-learning based model based on a rolling time window and a number of the sub-group of incident records; creating a problem record based on the clustered incident records: populating the problem record with information related to the clustered incident records; linking the clustered incident records to the problem record; providing a notification that the problem record has been created; receiving a resolution for the problem record; and updating, based on the resolution, the machine-learning based model to learn an association between extracted features of the resolution and extracted features of the clustered incident records.

As will be apparent from the embodiments below, an advantage to the disclosed systems and methods is that the disclosed systems and methods provide an end-to-end approach to incidents, as compared to current isolated improvements per department, which will lead to increased communication and focus on common problems. The disclosed systems and methods provides a solution for all departments in a company to supply data to be commonly available for insights to all departments. As a result, a team may take common actions to address related incidents in all departments, for example.

For example, the disclosed systems and methods may enhance the data quality and/or best practices standardizing the resolution of recurring incidents and/or solving the underlying, systemic issues causing these recurring incidents. The disclosed systems and methods may aggregate and cluster huge volumes of incidents that a human being (or team of humans) cannot practically parse in reasonable timeframes. The disclosed systems and methods may automate the creation of a cluster ticket via API calls from a cloud environment.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system overview for using artificial intelligence to predict and troubleshoot incidents in a system, according to one or more embodiments.
FIG. 2 depicts a flowchart of a method 200 for using artificial intelligence to cluster incidents and create a problem record in a system, according to one or more embodiments.
FIG. 3 depicts a flowchart of a method 300 for using artificial intelligence to resolve and track a problem record for incidents in a system, according to one or more embodiments.
FIG. 4 depicts a flowchart of a method 400 for identifying and handling incidents using a machine-learning based model, according to one or more embodiments.
FIG. 5 depicts a flowchart of a method 500 for identifying and handling incidents using a machine-learning based model, according to one or more embodiments.
FIG. 6 illustrates an implementation of a general computer system that may execute techniques presented herein.

### DETAILED DESCRIPTION OF EMBODIMENTS

Various embodiments of the present disclosure relate generally to identifying and resolving incidents in a system using an artificial intelligence model and, more particularly, to identifying and resolving clusters of similar recurring incidents in a system using an artificial intelligence model.

The subject matter of the present disclosure will now be described more fully with reference to the accompanying drawings that show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter may be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below: however, any terminology intended to be interpreted in any restricted manner will be overtly and specifically defined as such in this Detailed Description section.

Software companies have been struggling to avoid outages from incidents that may be caused by upgrading software or hardware components, or changing a member of a team, for example.

One or more embodiments may be able to reduce a burden on a company to identify and resolve incidents. In the context of the disclosure, an incident may be any change in a system, such as an outage or a performance change, for example. Incidents may be manually reported by customers or personnel, may be automatically logged by internal systems, or may be captured in other ways. One or more embodiments may provide IT management, governance, and operations with a solution to identify and resolve incidents and have an impact in an ongoing, dynamic way. One or more embodiments may be extended to clients and users of services and software with applications that are connected to systems. One or more embodiments may reach many different areas of the IT operations lifecycle, such as the identification of high-risk groups or infrastructure components, and may transform the way that decisions and reviews on incidents are made. Feedback from incident resolution teams may be integrated back into the AI models and improve the incident resolution over time.

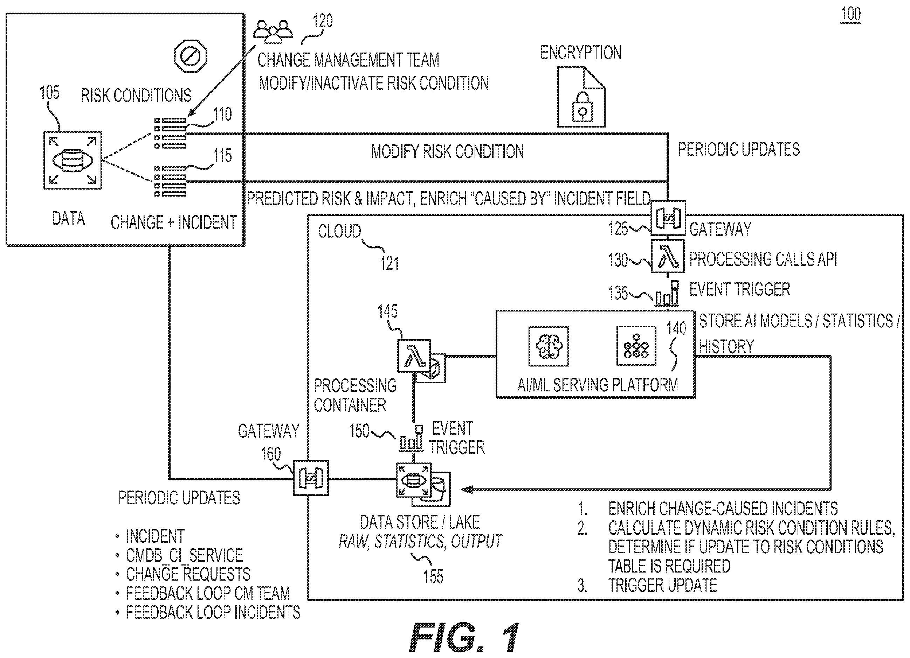

FIG. 1 depicts an exemplary system overview for using artificial intelligence to predict and troubleshoot incidents in a system, according to one or more embodiments.

As shown in FIG. 1, a Problem Assessment System 100 may include relational database 105 including problem table 110 and incident table 115. Problem table 110 and incident table 115 may be provided as one or more tables, and may include, for example, one or more problems, tasks, risk conditions, incidents, or changes. Problem table 110 may be managed by a problem management team 120. Relational database 105 may be connected through encryption to gateway 125 in cloud 121, and may send and receive periodic updates to and from cloud 121. Cloud 121 may be a remote cloud service, a local service, or any combination thereof. Cloud 121 may include gateway 125 connected to processing API 130 which may be used with event trigger 135 to update an artificial intelligence model 140. Artificial intelligence model 140 may send and receive data, using Container Management Platform 145 and event trigger 150, to and from Relational Database Service 155. Relational Database Service 155 may be connected to relational database 105 through gateway 160, and may send and receive periodic updates to and from relational database 105 through gateway 160.

Artificial intelligence model 140 may include a machine learning component. One of the machine learning techniques that may be useful and effective for the analysis is a neural network, which is a type of supervised machine learning. Nonetheless, it should be noted that other machine learning techniques and frameworks may be used to perform the methods contemplated by the present disclosure. For example, the systems and methods may be realized using other types of supervised machine learning such as regression problems, random forest, etc., using unsupervised machine learning such as cluster algorithms, principal component analysis (PCA), etc., and/or using reinforcement learning.

Problem Assessment System 100may provide an incident identification model that may predict an incident for every change. This may be accomplished by using an incident journey, so that the system may reverse engineer and identify the patterns in incoming incidents, by training an incident classification model that will tag changes to an incident, and by using a threshold analysis for clustering the incidents. The thresholds may be dynamic and specific for a particular Assignment Group. The model may cluster incidents proactively in real-time as incident, issue ticket, and script data are collected.

Problem Assessment System 100 may provide a model that can proactively suggest code changes/resolutions for incoming incidents, by building a classification / probability prediction (for example, Multi-Layer Perceptron, Logistic Regression, or Artificial Neural Network) model to identify whether a new incident is code change related or not. If a new incident is code change related, the incident journey may be used to identify which part of the code that needs to be changed to fix the issue. In the code, the incident journey may identify which branch, file, or class or module should be changed.

Here, topic modeling, such as Latent Dirichlet Allocation or Neural Topic Modeling, and clustering, such as Bidirectional Encoder Representations from Transformers or Hierarchical Density-Based Spatial Clustering of Applications with Noise, for example, may be performed using metadata from a variety of sources to create clusters. Unsupervised learning may be done for incident descriptions, resolution notes, issue tracking tickets, and code repository commit messages, for example. Auto-labeling of the created clusters may be performed using topic modeling. The finalized clusters may be used as classes to train a supervised classifier model. Because the amount of data may be massive, various Deep Learning models such as Artificial Neural Network, Recurrent Neural Networks, and Long-Short Term Memory may be used. Using the final classification tags from the supervised model, an incident journey may be mapped. These are merely examples of a machine-learning based model, and the disclosure is not limited to these examples.

As an example, metadata may be provided from relational database 105 including incident reports with information for each incident provided with an incident number, closed date/time, category, close code, close note, long description, short description, root cause, and assignment group. As an example, the metadata may be provided from relational database 105 including incident reports with information for each incident provided with an issue key, description, summary, label, issue type, fix version, environment, author, and comments. As an example, metadata may be provided from relational database 105 including incident reports with information for each incident provided with a file name, script name, script type, script description, display identifier, message, committer type, committer link, properties, file changes, and branch information. These are merely examples of information that may be used as metadata, and the disclosure is not limited to these examples.

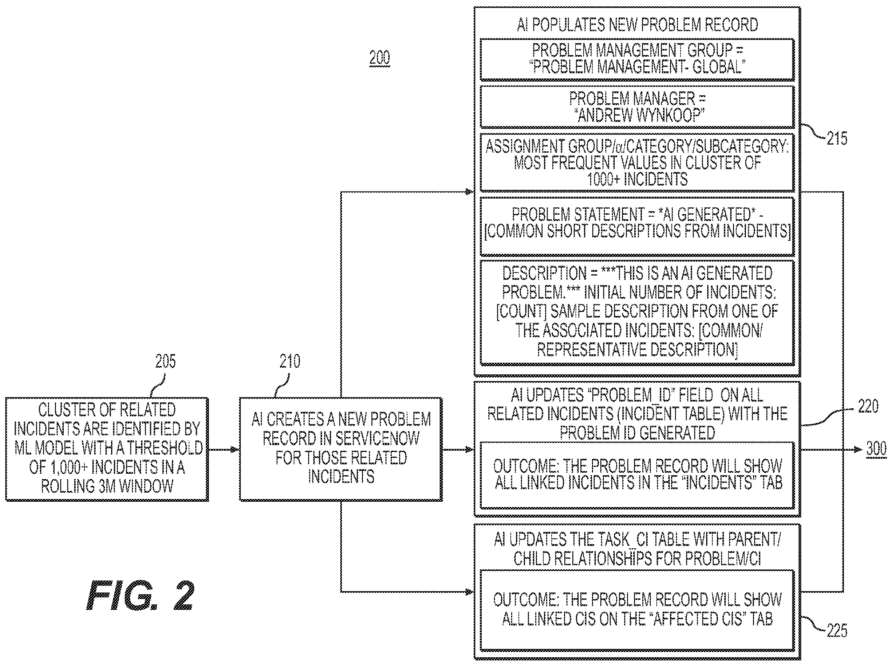

FIG. 2 depicts a flowchart of a method 200 for using artificial intelligence to cluster incidents and create a problem record in a system, according to one or more embodiments.

As shown in FIG. 2, operation 205 may include a cluster of related incidents being identified by a machine learning model with a record count threshold of, for example, at least 1000 incidents in a rolling window of, for example, three months. More or fewer numbers of records may be used for the threshold, and the rolling window may be shortened or lengthened as needed. In operation 210, Problem Assessment System 100 may create a new problem record in a digital workflow management system for the identified cluster of related incidents. In operation 215, the Problem Assessment System 100 may populate the new problem record. For example, the new problem record may include a problem management group field, a problem manager, an assignment group or category, a problem short description, and a problem long description. Alternatively or additionally, in operation 220, the Problem Assessment System 100 may update a problem record identification field, for example, in all related incidents identified in the cluster with an identification of the new problem record, so that the new problem record includes a link to all related incidents identified in the cluster, and vice versa. Alternatively or additionally, in operation 225, the Problem Assessment System 100 may create a linked relationship between the new problem record and all related incidents identified in the cluster, so that the new problem record includes a link to all related incidents identified in the cluster, and vice versa. The linked relationship may be created in a table with a parent/child relationship between the new problem record and all related incidents identified in the cluster. However, the disclosure is not limited thereto, and other linking methods may be used.

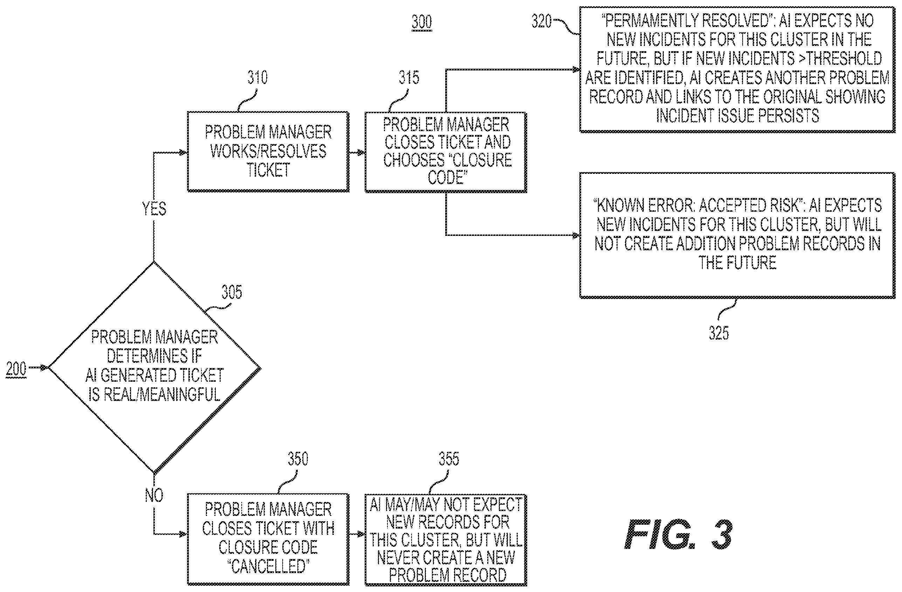

FIG. 3 depicts a flowchart of a method 300 for using artificial intelligence to resolve and track a problem record for incidents in a system, according to one or more embodiments.

The Problem Assessment System 100 may provide a notification that a new problem record was created in method 200. As shown in FIG. 3, in operation 305, the problem manager may make an initial determination of whether the new problem record is a true incident cluster or a false positive, for example.

If the new problem record is a true incident cluster, in operation 310, the incident team may work to resolve the issue identified in the new problem record, and provide a resolution to the Problem Assessment System 100. If the new problem record is not a true incident cluster, in operation 350, the problem manager may provide instructions to the Problem Assessment System 100 to cancel the new problem record. If the new problem record is not a true incident cluster, in operation 355, the Problem Assessment System 100 may expect no new incidents for the cluster of related incidents, and will not create new additional problem records related to the incident.

If the new problem record is a true incident cluster, in operation 315, the problem manager may provide instructions to the Problem Assessment System 100 to close the new problem record, and may choose a closure process. If the closure process is "permanently resolved", for example, in operation 320, the Problem Assessment System 100 may expect no new incidents for the cluster of related incidents. However, if new incidents are identified, based on the threshold, then Problem Assessment System 100 may create another problem record with a link to the previously created problem record, indicating the issue identified in the previously created problem record persists, and was not permanently resolved. In operation 325, if the closure process is a known error, the Problem Assessment System 100 may expect new incidents for the cluster of related incidents, but will not create new additional problem records related to the incident.

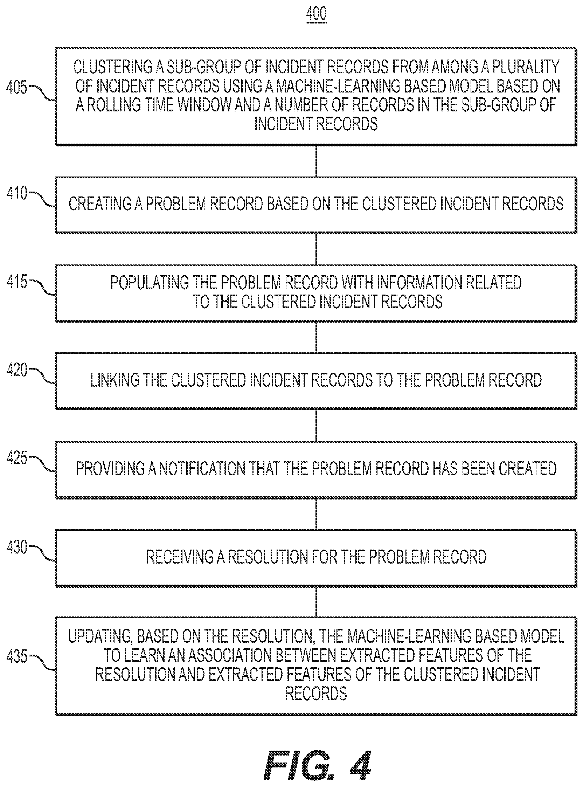

FIG. 4 depicts a flowchart of a method 400 for identifying and handling incidents using a machine-learning based model, according to one or more embodiments.

As shown in FIG. 4, the method 400 for identifying and handling related incidents using a machine-learning based model may include, performing by one or more processors 602, various operations. Operation 405 may include clustering a sub-group of incident records from among a plurality of incident records using the machine-learning based model based on a rolling time window and a number of records in the sub-group of incident records. Operation 410 may include creating a problem record based on the clustered incident records. Operation 415 may include populating the problem record with information related to the clustered incident records. Operation 420 may include linking the clustered incident records to the problem record. Operation 425 may include providing a notification that the problem record has been created. Operation 430 may include receiving a resolution for the problem record. Operation 435 may include updating, based on the resolution, the machine-learning based model to learn an association between extracted features of the resolution and extracted features of the clustered incident records.

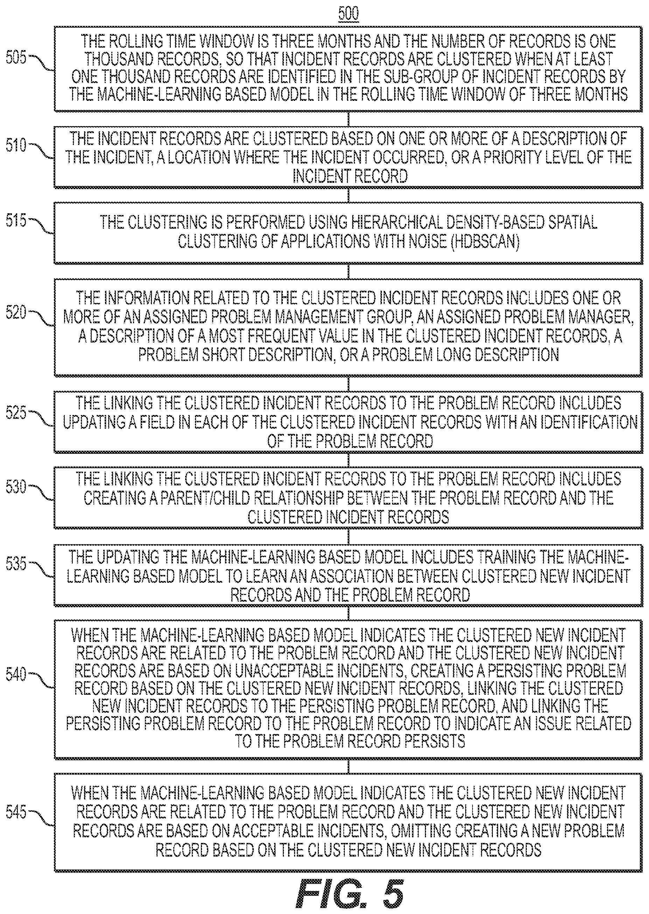

FIG. 5 depicts a flowchart of a method 500 for identifying and handling incidents using a machine-learning based model, according to one or more embodiments.

Operation 505 may include wherein the rolling time window is three months and the number of records is one thousand records, so that incident records are clustered when at least one thousand records are identified in the sub-group of incident records by the machine-learning based model in the rolling time window of three months. Operation 510 may include wherein the incident records are clustered based on one or more of a description of the incident, a location where the incident occurred, or a priority level of the incident record. Operation 515 may include wherein the clustering is performed using Hierarchical Density-Based Spatial Clustering of Applications with Noise (HDBSCAN). Operation 520 may include wherein the information related to the clustered incident records includes one or more of an assigned problem management group, an assigned problem manager, a description of a most frequent value in the clustered incident records, a problem short description, or a problem long description. Operation 525 may include wherein the linking the clustered incident records to the problem record includes updating a field in each of the clustered incident records with an identification of the problem record. Operation 530 may include wherein the linking the clustered incident records to the problem record includes creating a parent/child relationship between the problem record and the clustered incident records.

Operation 535 may include wherein the updating the machine-learning based model includes training the machine-learning based model to learn an association between clustered new incident records and the problem record. Operation 540 may include when the machine-learning based model indicates the clustered new incident records are related to the problem record and the clustered new incident records are based on unacceptable incidents, creating a persisting problem record based on the clustered new incident records, linking the clustered new incident records to the persisting problem record, and linking the persisting problem record to the problem record to indicate an issue related to the problem record persists. Operation 545 may include when the machine-learning based model indicates the clustered new incident records are related to the problem record and the clustered new incident records are based on acceptable incidents, omitting creating a new problem record based on the clustered new incident records.

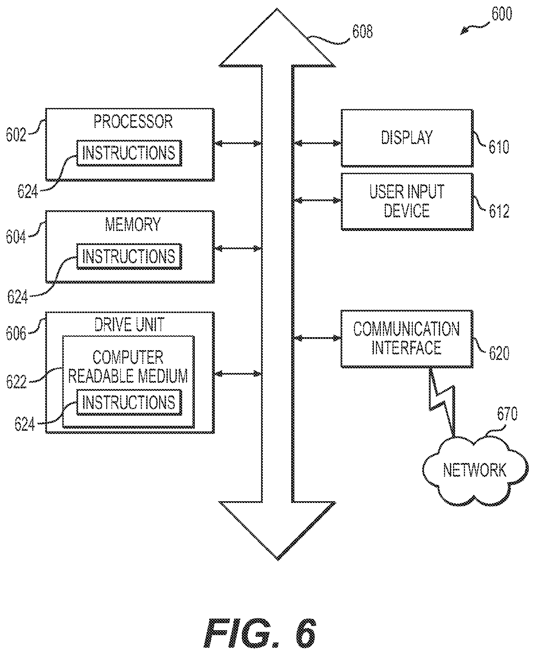

FIG. 6 illustrates an implementation of a general computer system that may execute techniques presented herein.

Unless specifically stated otherwise, as apparent from the following discussions, it is appreciated that throughout the specification, discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer," a "computing machine," a "computing platform," a "computing device," or a "server" may include one or more processors.

FIG. 6 illustrates an implementation of a computer system 600. The computer system 600 can include a set of instructions that can be executed to cause the computer system 600 to perform any one or more of the methods or computer based functions disclosed herein. The computer system 600 may operate as a standalone device or may be connected, e.g., using a network, to other computer systems or peripheral devices.

In a networked deployment, the computer system 600 may operate in the capacity of a server or as a client user computer in a server-client user network environment, or as a peer computer system in a peer-to-peer (or distributed) network environment. The computer system 600 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the computer system 600 can be implemented using electronic devices that provide voice, video, or data communication. Further, while a computer system 600 is illustrated as a single system, the term "system" shall also be taken to include any collection of systems or sub-systems that individually or jointly execute a set, or multiple sets, of instructions to perform one or more computer functions.

As illustrated in FIG. 6, the computer system 600 may include a processor 602, e.g., a central processing unit (CPU), a graphics processing unit (GPU), or both. The processor 602 may be a component in a variety of systems. For example, the processor 602 may be part of a standard personal computer or a workstation. The processor 602 may be one or more general processors, digital signal processors, application specific integrated circuits, field programmable gate arrays, servers, networks, digital circuits, analog circuits, combinations thereof, or other now known or later developed devices for analyzing and processing data. The processor 602 may implement a software program, such as code generated manually (i.e., programmed).

The computer system 600 may include a memory 604 that can communicate via a bus 608. The memory 604 may be a main memory, a static memory, or a dynamic memory. The memory 604 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 604 includes a cache or random-access memory for the processor 602. In alternative implementations, the memory 604 is separate from the processor 602, such as a cache memory of a processor, the system memory, or other memory. The memory 604 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 604 is operable to store instructions executable by the processor 602. The functions, acts or tasks illustrated in the figures or described herein may be performed by the processor 602 executing the instructions stored in the memory 604. The functions, acts or tasks are independent of the particular type of instructions set, storage media, processor or processing strategy and may be performed by software, hardware, integrated circuits, firm-ware, microcode and the like, operating alone or in combination. Likewise, processing strategies may include multiprocessing, multitasking, parallel processing and the like.

As shown, the computer system 600 may further include a display 610, such as a liquid crystal display (LCD), an organic light emitting diode (OLED), a flat panel display, a solid-state display, a cathode ray tube (CRT), a projector, a printer or other now known or later developed display device for outputting determined information. The display 610 may act as an interface for the user to see the functioning of the processor 602, or specifically as an interface with the software stored in the memory 604 or in the drive unit 606.

Additionally or alternatively, the computer system 600 may include an input device 612 configured to allow a user to interact with any of the components of computer system 600. The input device 612 may be a number pad, a keyboard, or a cursor control device, such as a mouse, or a joystick, touch screen display, remote control, or any other device operative to interact with the computer system 600.

The computer system 600 may also or alternatively include drive unit 606 implemented as a disk or optical drive. The drive unit 606 may include a computer-readable medium 622 in which one or more sets of instructions 624, e.g. software, can be embedded. Further, the instructions 624 may embody one or more of the methods or logic as described herein. The instructions 624 may reside completely or partially within the memory 604 and/or within the processor 602 during execution by the computer system 600. The memory 604 and the processor 602 also may include computer-readable media as discussed above.

In some systems, a computer-readable medium 622 includes instructions 624 or receives and executes instructions 624 responsive to a propagated signal so that a device connected to a network 670 can communicate voice, video, audio, images, or any other data over the network 670. Further, the instructions 624 may be transmitted or received over the network 670 via a communication port or interface 620, and/or using a bus 608. The communication port or interface 620 may be a part of the processor 602 or may be a separate component. The communication port or interface 620 may be created in software or may be a physical connection in hardware. The communication port or interface 620 may be configured to connect with a network 670, external media, the display 610, or any other components in computer system 600, or combinations thereof. The connection with the network 670 may be a physical connection, such as a wired Ethernet connection or may be established wirelessly as discussed below. Likewise, the additional connections with other components of the computer system 600 may be physical connections or may be established wirelessly. The network 670 may alternatively be directly connected to a bus 608.

While the computer-readable medium 622 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 622 may be non-transitory, and may be tangible.

The computer-readable medium 622 can include a solid-state memory such as a memory card or other package that houses one or more non-volatile read-only memories. The computer-readable medium 622 can be a random-access memory or other volatile rewritable memory. Additionally or alternatively, the computer-readable medium 622 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The computer system 600 may be connected to a network 670. The network 670 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 670 may include wide area networks (WAN), such as the Internet, local area networks (LAN), campus area networks, metropolitan area networks, a direct connection such as through a Universal Serial Bus (USB) port, or any other networks that may allow for data communication. The network 670 may be configured to couple one computing device to another computing device to enable communication of data between the devices. The network 670 may generally be enabled to employ any form of machine-readable media for communicating information from one device to another. The network 670 may include communication methods by which information may travel between computing devices. The network 670 may be divided into sub-networks. The sub-networks may allow access to all of the other components connected thereto or the sub-networks may restrict access between the components. The network 670 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

It should be appreciated that in the above description of exemplary embodiments of the disclosure, various features of the disclosure are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed disclosure requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this disclosure.

Furthermore, while some embodiments described herein include some but not other features included in other embodiments, combinations of features of different embodiments are meant to be within the scope of the disclosure, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the disclosure.

In the description provided herein, numerous specific details are set forth. However, it is understood that embodiments of the disclosure may be practiced without these specific details. In other instances, well-known methods, structures and techniques have not been shown in detail in order not to obscure an understanding of this description.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Thus, while there has been described what are believed to be the preferred embodiments of the disclosure, those skilled in the art will recognize that other and further modifications may be made thereto without departing from the spirit of the disclosure, and it is intended to claim all such changes and modifications as falling within the scope of the disclosure. For example, any formulas given above are merely representative of procedures that may be used. Functionality may be added or deleted from the block diagrams and operations may be interchanged among functional blocks. Steps may be added or deleted to methods described within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted except in light of the attached claims and their equivalents.

The following paragraphs provide a list of additional embodiments which may serve as basis for claims in this application or in any subsequently filed divisional application(s).
Embodiment 1. A method for identifying and handling incidents using a machine-learning based model, the method comprising, performing by one or more processors, operations including: clustering a sub-group of incident records from among a plurality of incident records using the machine-learning based model based on a rolling time window and a number of records in the sub-group of incident records; creating a problem record based on the clustered incident records: populating the problem record with information related to the clustered incident records; linking the clustered incident records to the problem record; providing a notification that the problem record has been created; receiving a resolution for the problem record; and updating, based on the resolution, the machine-learning based model to learn an association between extracted features of the resolution and extracted features of the clustered incident records.
Embodiment 2. The method of Embodiment 1, wherein the rolling time window is three months and the number of records is one thousand records, so that incident records are clustered when at least one thousand records are identified in the sub-group of incident records by the machine learning based model in the rolling time window of three months.
Embodiment 3. The method of Embodiment 1, wherein the incident records are clustered based on one or more of a description of the incident, a location where the incident occurred, or a priority level of the incident record.
Embodiment 4. The method of Embodiment 1, wherein the clustering is performed using Hierarchical Density-Based Spatial Clustering of Applications with Noise (HDBSCAN).
Embodiment 5. The method of Embodiment 1, wherein the information related to the clustered incident records includes one or more of an assigned problem management group, an assigned problem manager, a description of a most frequent value in the clustered incident records, a problem short description, or a problem long description.
Embodiment 6. The method of Embodiment 1, wherein the linking the clustered incident records to the problem record includes updating a field in each of the clustered incident records with an identification of the problem record.
Embodiment 7. The method of Embodiment 1, wherein the linking the clustered incident records to the problem record includes creating a parent/child relationship between the problem record and the clustered incident records.
Embodiment 8. The method of Embodiment 1, wherein the updating the machine-learning based model includes training the machine-learning based model to learn an association between clustered new incident records and the problem record.
Embodiment 9. The method of Embodiment 8, wherein the operations further include: when the machine-learning based model indicates the clustered new incident records are related to the problem record and the clustered new incident records are based on unacceptable incidents, creating a persisting problem record based on the clustered new incident records, linking the clustered new incident records to the persisting problem record, and linking the persisting problem record to the problem record to indicate an issue related to the problem record persists.
Embodiment 10. The method of Embodiment 8, wherein the operations further include: when the machine-learning based model indicates the clustered new incident records are related to the problem record and the clustered new incident records are based on acceptable incidents, omitting creating a new problem record based on the clustered new incident records.
Embodiment 11. A computer-implemented system for identifying and handling related incidents using a machine-learning based model, the computer-implemented system comprising: a memory to store instructions; and one or more processors to execute the stored instructions to perform operations including: clustering a sub-group of incident records from among a plurality of incident records using the machine-learning based model based on a rolling time window and a number of records in the sub-group of incident records; creating a problem record based on the clustered incident records; populating the problem record with information related to the clustered incident records; linking the clustered incident records to the problem record; providing a notification that the problem record has been created; receiving a resolution for the problem record; and updating, based on the resolution, the machine-learning based model to learn an association between extracted features of the resolution and extracted features of the clustered incident records.
Embodiment 12. The computer-implemented system of Embodiment 11, wherein the rolling time window is three months and the number of records is one thousand records, so that incident records are clustered when at least one thousand records are identified in the sub-group of incident records by the machine-learning based model in the rolling time window of three months.
Embodiment 13. The computer-implemented system of Embodiment 11, wherein the incident records are clustered based on one or more of a description of the incident, a location where the incident occurred, or a priority level of the incident record.
Embodiment 14. The computer-implemented system of Embodiment 11, wherein the clustering is performed using Hierarchical Density -Based Spatial Clustering of Applications with Noise (HDBSCAN).
Embodiment 15. The computer-implemented system of Embodiment 11, wherein the information related to the clustered incident records includes one or more of an assigned problem management group, an assigned problem manager, a description of a most frequent value in the clustered incident records, a problem short description, or a problem long description.
Embodiment 16. The computer-implemented system of Embodiment 11, wherein the linking the clustered incident records to the problem record includes updating a field in each of the clustered incident records with an identification of the problem record.
Embodiment 17. The computer-implemented system of Embodiment 11, wherein the linking the clustered incident records to the problem record includes creating a parent/ child relationship between the problem record and the clustered incident records.
Embodiment 18. The computer-implemented system of Embodiment 11, wherein the updating the machine-learning based model includes training the machine-learning based model to learn an association between clustered new incident records and the problem record.
Embodiment 19. The computer-implemented system of Embodiment 18, wherein the operations further include: when the machine-learning based model indicates the clustered new incident records are related to the problem record and the clustered new incident records are based on unacceptable incidents, creating a persisting problem record based on the clustered new incident records, linking the clustered new incident records to the persisting problem record, and linking the persisting problem record to the problem record to indicate an issue related to the problem record persists, and when the machine-learning based model indicates the clustered new incident records are related to the problem record and the clustered new incident records are based on acceptable incidents, omitting creating a new problem record based on the clustered new incident records.
Embodiment 20. A non-transitory computer readable medium storing instructions that, when executed by one or more processors, cause the one or more processors to perform operations including: clustering a sub-group of incident records from among a plurality of incident records using a machine-learning based model based on a rolling time window and a number of the sub-group of incident records; creating a problem record based on the clustered incident records: populating the problem record with information related to the clustered incident records; linking the clustered incident records to the problem record; providing a notification that the problem record has been created; receiving a resolution for the problem record; and updating, based on the resolution, the machine-learning based model to learn an association between extracted features of the resolution and extracted features of the clustered incident records.

## Claims

1. A computer-implemented method for automatically identifying and handling incidents using incident records in an IT system using a machine-learning based model (140), wherein an incident is an outage of the IT system based on a code change, the method comprising, performing by one or more processors (602), operations including:
clustering a sub-group of related incident records from among a plurality of incident records (405) using the machine-learning based model (140) based on a rolling time window and a number of records in the sub-group of incident records;
automatically creating, via an API call from a cloud environment (121) to a digital workflow management system, a problem record (410) based on the clustered incident records;
automatically populating the problem record (415) with information related to the clustered incident records;
automatically linking the clustered incident records to the problem record (420) by creating a parent/child relationship between the problem record and the clustered incident records;
providing a notification that the problem record has been created (425);
receiving a code change based resolution for the problem record (430);
updating, based on the resolution received for the problem record, the machine-learning based model (435) to learn an association between extracted features of the resolution and extracted features of the clustered incident records associated with the problem record, including training the machine-learning based model to learn an association between clustered new incident records and the problem record; and
after the problem record has been closed as permanently resolved, when the machine-learning based model identifies that the clustered new incident records are related to the problem record and the clustered new incident records are based on unacceptable incidents, automatically creating a persisting problem record based on the clustered new incident records, linking the clustered new incident records to the persisting problem record, and linking the persisting problem record to the problem record to indicate an issue related to the problem record persists.

2. The method of claim 1, wherein the rolling time window is three months and the number of records is one thousand records, so that incident records are clustered when at least one thousand records are identified in the sub-group of incident records by the machine-learning based model in the rolling time window of three months.

3. The method of claim 1, wherein the incident records are clustered based on one or more of a description of the incident, a location where the incident occurred, or a priority level of the incident record.

4. The method of claim 1, wherein the clustering is performed using Hierarchical Density-Based Spatial Clustering of Applications with Noise (HDBSCAN).

5. The method of claim 1, wherein the information related to the clustered incident records includes one or more of an assigned problem management group, an assigned problem manager, a description of a most frequent value in the clustered incident records, a problem short description, or a problem long description.

6. The method of claim 1, wherein the automatically linking the clustered incident records to the problem record further includes updating a field in each of the clustered incident records with an identification of the problem record.

7. The method of claim 1, wherein when the machine-learning based model indicates the clustered new incident records are related to the problem record and the clustered new incident records are based on acceptable incidents, omitting creating a new problem record based on the clustered new incident records.

8. The method of claim 1, wherein the plurality of incident records comprises a volume of incident records that cannot be practically parsed by a human being in a reasonable timeframe.

9. The method of claim 1, wherein the machine-learning based model is configured to cluster the incident records based on identifying incidents, tagging changes in the IT system corresponding to the incidents, and clustering the incident records in real-time based on a threshold.

10. The method of claim 1, further comprising using the updated machine-learning based model to identify a portion of computer code associated with an incoming incident record that when changed may remedy the outage to the IT system, wherein the portion of computer code includes at least one of a branch, file, class, or module.

11. A computer-implemented system for automatically identifying and handling incidents using incident records in an IT system, wherein an incident is an outage of the IT system based on a code change, the computer-implemented system comprising:
a memory to store instructions; and
one or more processors (602) to execute the stored instructions to perform the method according to any one of claims 1 to 10.
